# EUROPÄISCHE PATENTSCHRIFT

(11) **EP 1 052 500 B1**
(45) Veröffentlichungstag und Bekanntmachung des Hinweises auf die Patenterteilung: **20.10.2010**
(21) Anmeldenummer: 99115656.3
(22) Anmeldetag: 07.08.1999
(51) Int. Cl.: C04B 24/00

(54) **Mahlhilfsmittel für die Röntgenfluoreszenzanalyse**
Grinding aids for the X-ray fluorescence analysis
Adjuvants de broyage pour l'analyse par fluorescence aux rayons X

(30) Priorität: 11.05.1999 DE 19921549
(43) Veröffentlichungstag der Anmeldung: 15.11.2000
(73) Patentinhaber: Merck Patent GmbH, 64293 Darmstadt (DE)
(72) Erfinder: Hoffmann, Frank, Dr., 64291 Darmstadt (DE); Martens, Wolfgang, Dr., 64372 Ober-Ramstadt (DE); Wachsmann, Manfred, Dr., 64739 Höchst (DE)

(56) Entgegenhaltungen:
- EP-A- 0 690 302
- EP-A- 0 701 120
- US-A- 3 773 921
- US-A- 4 574 080
- US-A- 5 292 461
- GALSON D A ET AL: "THE DETERMINATION OF LOW CONCENTRATIONS OF U, TH AND K BY XRF SPECTROMETRY" CHEMICAL GEOLOGY, ELSEVIER SCIENCE PUBLISHER B.V., AMSTERDAM, NL, Bd. 38, 1983, Seiten 225-237, XP000900483 ISSN: 0009-2541
- K. H. KOCH ET AL.: "Rationalisierung der Multi-Elementanalytik durch Einsatz der RFA" LABOR-PRAXIS., Nr. 14, Dezember 1990 (1990-12), Seiten 1022-1027, XP002177456 VOGEL, WUERZBURG., DE ISSN: 0344-1733
- ALLAN G G ET AL: "Sugar-cellulose composites. II: The properties of paper containing monosaccharides" TAPPI JOURNAL, TECHNICAL ASSOCIATION OF THE PULP & PAPER INDUSTRY. ATLANTA, US, vol. 82, no. 4, 1 April 1999 (1999-04-01), pages 196-202, XP001538574 ISSN: 0734-1415

## Beschreibung

Die Erfindung betrifft Mahlhilfsmittel für die Röntgenfluoreszenz-Analyse (RFA).

Bei der RFA spielt die Probenvorbereitung eine große Rolle. Nur bei sorgfältiger Probenvorbereitung können korrekte Analysenergebnisse erhalten werden. Metallische Proben sollten auf einer Seite fein abgedreht, eventuell geschliffen oder poliert werden. Organische und biologische Proben können verascht werden. Oxidische Proben, wie Gesteine, Gläser, Schlacken usw., können pulverisiert werden, einheitlich fein vermahlen und eventuell mit einem Mahlhilfsmittel bzw. Binder verpresst werden.

In Chemical Geology 38, S. 225, 1983 ist die Bestimmung niedriger Konzentrationen von Uran, Thorium und Kalium durch RFA beschrieben. Dabei wird ein fein gemahlenes, homogenisiertes Gesteinspulver mit einigen Tropfen Polyvinylpyrroildon/Methylcellulose-Binder versetzt und in Form von Tabletten verpreßt und analysiert.

In EP 0690302 wird ein Mahihilfsmittel aus Polyvinylpyrrolidon und mikrokristalliner Cellulose beschrieben.

K.E. Wilson und A. Potter stellen in der Zeitschrift Drug Development and Industrial Pharmacy, 24(11), 1017-1024 (1998) das Verpressen von Mischungen aus mikrokristalliner Cellulose, Magnesiumstearat und Lactose-Hydrat vor.

US 5,292,461 offenbart ein Verfahren zur Herstellung von Pellets, bei dem eine vielzahl versschiedener Füllstoffe, Binder und Gleitmittel genannt werden.

Im Handel sind zur Probenvorbereitung außerdem Tabletten aus Kanadabalsam und Cellulose erhältlich, die mit einem Zuckerüberzug versehen sind. Diese Tabletten werden vom Anwender mit der zu untersuchenden Probe fein vermahlen und erneut in Form von Tabletten verpreßt, mit denen dann die RFA durchgeführt wird.

Alle bekannten Hilfsmittel weisen erhebliche Nachteile auf. Tabletten aus Polyvinylpyrrolidon und Methylcellulose sind nicht bruchstabil. Die Mahlhilfsmittel aus Polyvinylpyrrolidon und mikrokristalliner Cellulose müssen unter klimatisierten Bedingungen gehandhabt werden, da sie hygroskopisch sind. Kanadabalsam wiederum ist klebrig und deshalb nur schwierig mit Cellulose zu homogenisieren und zu verarbeiten. Zusätzlich müssen die Tabletten dragiert werden, um deren Verkleben während der Lagerung zu vermeiden. Dies erfordert einen zusätzlichen Arbeitsgang bei der Produktion.

Aufgabe der vorliegenden Erfindung ist es daher, Mahlhilfsmittel für die RFA zur Verfügung zu stellen, die die genannten Nachteile nicht aufweise und deren Herstellung und Handhabung möglichst einfach ist.

Es wurde gefunden, daß Mahlhilfsmittel aus Bindern, wie Cellulose, Füllstoffen, wie Lactose, und Gleitmitteln, wie Stearinsäure, ideale Eigenschaften zur Probenvorbereitung für die RFA aufweisen. Mahlhilfsmittel dieser Zusammensetzung sind leicht zu verarbeiten, kleben nicht und sind nicht hygrospkopisch.

Gegenstand der Erfindung ist daher die Verwendung eines Mahlhilfsmittels, das aus 5 bis 20 Gew.% Lactose- Monohydrat, 77,5 bis 95 Gew.% mikrokristalliner Cellulose und 0 bis 2,5 Gew.% Stearinsäure besteht, zur Probenvorbereitung für die Röntgentfuoreszenz-Analyse.

Bevorzugte Ausführungsform sind Mahlhiltsmittel, die als Pulver oder tablettiert vorliegen.

Die Mittel werden entsprechend der Handhabung für bekannte Mittel mit der Probe vermahlen und zu den Endtabletten verpreßt, die dann mittels RFA vermessen werden. Allgemeine Hinweise zur Handhabung finden sich in K. H. Koch, K. D. Ohls, J. Flock, Steel Technology International, S. 293-298, Sterling Publications International, London, 1990 oder K. H. Koch, K. D. Ohls, J. Flock, Rationalisierung der Multi-Elementanalytik durch Einsatz der RFA, Laborpraxis 14, S. 1022-1027, 1990.

Im allgemeinen unterscheidet sich die Dosierung des Mittels nicht von der Dosierung herkömmlicher Mittel. Typischerweise werden 20 g einer Probe ca. 2 g des Mahlhilfsmittels zugesetzt.

Mahlhilfsmittel sollten neben einfacher Produktion und Handhabung folgende Anforderungen erfüllen:
- Höhere Temperaturen bei der Vermahlung führen zu vermehrter Anhaftung der Mischung aus Mahlhilfsmittel und Probe im Mahlgefäß. Demnach sollte durch die Mahlhilfe die Temperatur bei der Vermahlung möglichst niedrig gehalten werden, so daß die Proben schneller hintereinander verarbeitet werden können, da das Mahlgefäß nicht so lange abkühlen muß.
- Zur Minimierung von Korngrößeneffekten bei der Analyse ist eine hohe Mahlfeinheit erforderlich. Daher sollten die Proben in möglichst kurzer Zeit (Wärmeentwicklung !) sehr fein gemahlen werden.
- Nach der Mahlung sollte das Gemisch aus Probe und Mahlhilfsmittel rückstandsfrei aus dem Mahlgefäß entnommen werden können. Daher sollten Mahlhilfsmittel ein Ankleben der Mischung aus Mahlhilfsmittel und Probe an den Wänden des Mahlgefäßes (Schuppenbildung) verhindern.
- Die Endtablette muß eine bestimmte Mindestfestigkeit aufweisen, um beim Transport von der Presse zur RFA und bei der Messung nicht zerstört zu werden.

Den oben erwähnten Anforderungen wird durch die einzelnen Komponenten des Mittels Rechnung getragen. Die Mittel für die RFA bestehen bevorzugt aus einem polysaccharidischen Binder, einem Zucker oder Zuckeralkohol als Füllstoff und einem Gleitmittel.

Als Binder für das Mahlhilfsmittel können Polysaccharide und Polysaccharid-Derivate, insbesondere Stärke (z.B. Mais-, Reis-, Kartoffel- oder Weizenstärke), modifizierte Stärken (z.B. kaltlösliche Stärke, Hydroxyethylstärke), Cellulose (Cellulosepulver, mikrokristalline Cellulose) oder Cellulosederivate (Methylcellulose, Carboxymethylcellulose), besonders bevorzugt mikrokristalline Cellulose eingesetzt werden.

Als Füllstoffe werden Zucker oder Zuckeralkohole, insbesondere Lactose, Mannit, Glucose oder Saccharose, besonders bevorzugt Lactose verwendet.

Gleitmittel sind insbesondere Stearinsäure, Palmitinsäure, Stearyl-, Cetyl- oder Myristylalkohol, Glycerol-Fettsäureester (z.B. Ester oder Mischester der Palmitin-, oder Stearinsäure mit Glycerin), Polyethylenglykole oder Paraffin, besonders bevorzugt Stearinsäure. Calciumhydrogenphosphat oder Salze der obengenannten Säuren können als Gleitmittel für Mahlhilfsmittel für die RFA nicht verwendet werden, da sie das Ergebnis der RFA verfälschen würden.

Die prozentuale Zusammensetzung der Komponenten richtet sich nach der genauen Anwendung, vor allem der Beschaffenheit der Probe. Bevorzugterweise enthalten die Mahlhilfsmittel zwischen 0 und 3 Gewicht-% Gleitmittel, besonders bevorzugt zwischen 1 und 2,5 Gew.%. Das Gleitmittel verhindert bei hohen Drehzahlen die Schuppenbildung im Mahlgefäß, so daß weniger Rückstände im Mahlgefäß verbleiben. Andererseits wird durch den Zusatz von Gleitmitteln die Beschaffenheit der Endtablette beeinflußt. Bei Zusatz von zuviel Gleitmittel wird die Endtablette zu weich. Aus diesem Grund muß der Anteil des Gleitmittels in dem Mahlhilfsmittel sorgfältig dosiert werden. Bei harten Proben führen Anteile von ca. 2 Gew.% zu Endtabletten guter Qualität. Sind dagegen die Proben weich, so kann ein Anteil von 0,5 Gew.% oder weniger Gleitmittel ausreichen. Der Fachmann, dem die unterschiedliche Beschaffenheit des Probenmaterials bekannt ist, kann den Anteil des Gleitmittels an dem Mahlhilfsmittel sinnvoll variieren. Mahlhilfsmittel, die Gleitmittel enthalten, sind besonders gut auch für weiche Proben geeignet, wenn sie in Tablettenform zugesetzt werden.

Der Füllstoff-Anteil des Mittels liegt bevorzugt zwischen 2 und 50 Gew.%, besonders bevorzugt zwischen 5 und 20 Gew.%. Mit steigendem Gehalt an Füllstoff kann oft die Tablettierfähigkeit der Endtablette nicht mehr gewährleistet werden. In manchen Fällen können jedoch auch Mittel mit Füllstoff-Anteilen über 50 Gew.% eingesetzt werden; allerdings muß dann der Probe mehr Mahlhilfe als üblich zugesetzt werden, so daß die Nachweisgrenze der Analyse verschlechtert wird.

Der Anteil an Bindemittel wird entsprechend der beiden anderen Komponenten angeglichen. Bei einem bevorzugten Füllstoff-Anteil von 5 bis 20 Gew.% und einem Anteil von bis zu 3 Gew.% Gleitmittel, liegt der Anteil des Bindemittels typischerweise bei 77 bis 95 Gew.%.

Für viele Anwendungen haben sich Mahlhilfen aus mikrokristalliner Cellulose, Lactose-Monohydrat und Stearinsäure als besonders bevorzugt erwiesen. Der Lactose-Anteil beträgt dabei zwischen 5 und 20 Gew.%, bevorzugt 10 Gew.%, der Stearinsäureanteil zwischen 0 und 2,5 Gew.%, bevorzugt 2 Gew.%, der Anteil an Cellulose zwischen 77,5 und 95 Gew.%, bevorzugt 88 Gew.%.

Die Mahlhilfmittel können granuliert, kompaktiert, bevorzugt als Pulver oder besonders bevorzugt als Tablette eingesetzt werden. Die Tabletten können in unterschiedlichen Größen hergestellt werden, so daß eine Dosierung je nach Probengröße erfolgen kann.

Die Mahlhilfsmittel stellen somit eine wesentliche Verbesserung gegenüber den bisher bekannten Mitteln dar. Da sie weder klebrige noch stark hygroskopische Substanzen enthalten, zeichnen sie sich durch einfache Handhabung und Herstellung aus. Besonders in tablettierter Form eignen sie sich uneingeschränkt für vollautomatische Prozesse. Messungen verschiedener Proben, wie beispielsweise aus dem Bereich der Stahl- und Zementindustrie, führten zu reproduzierbaren Ergebnissen.

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiel

Die Mahlhilfsmittel wurden bezüglich ihrer Eigenschaften mit marktüblichen Mahlhilfetabletten auf Basis von Kanadabalsam verglichen.
Die Versuche wurden mit den Materialien Sinter und Hochofenschlacke durchgeführt. Die Probenmenge pro Mahlvorgang betrug konstant 20 g zuzüglich 2 g Mahlhilfsmittel.
Zur Temperaturmessung wurde direkt nach dem Öffnen des Mahlgefäßes ein Thermofühler hineingelegt. Die festhaftenden Rückstände im Mahlgefäß wurden durch Rückwiegen des gemahlenen Probenmaterials bestimmt.
Die Bestimmung der Partikelgröße erfolgte mit einem Laserbeugungs-Partikelanalysator. Zur Feststellung der Festigkeit der Endtabletten wurde eine Handhebelpresse benutzt.

Das Mahlhilfsmittel wurde in folgender Zusammensetzung verwendet:
88 Gew.% Cellulose, 10 Gew.% Lactose, 2 Gew.% Stearinsäure

Die Analysendaten der Probenmaterialien wurden zuvor nasschemisch bestimmt (Angaben in Massen-%):

### Sintermaterial:

| **SiO₂** | **Al₂O₃** | **CaO** | **P** | **MgO** | **Fe_{ges}** | **TiO₂** | **Mn** | **Cr** |
|---|---|---|---|---|---|---|---|---|
| 4,97 | 1,10 | 9,33 | 0,039 | 0,98 | 57,81 | 0,091 | 0,25 | 0,02 |

### Hochofenschlacke:

| **SiO₂** | **Al₂O₃** | **CaO** | **P** | **MgO** | **Fe_{ges}** | **TiO₂** | **Mn** |
|---|---|---|---|---|---|---|---|
| 34,8 | 10,9 | 41,6 | 0,0022 | 7,21 | 0,43 | 2,6 | 0,17 |

### Vergleich bezüglich Mahltemperatur, Rückstände, Festigkeit und Mahlfeinheit

### Mahltemperatur:

Bestimmt wurde die Erwärmung (ΔT [°C]) während einer Mahlung bezogen auf die Erwärmung unter Verwendung der marktüblichen Mahlhilfe. Negative ΔT-Werte bedeuten also, daß eine geringere Erwärmung als unter Verwendung der marktüblichen Mahlhilfe auftritt.

| | ΔT Sinter | ΔT Hochofenschlacke |
|---|---|---|
| Mahlhilfsmittel | -5 | -2 |

### Rückstände:

| | Sinter Rückstand [g] | Hochofenschlacke Rückstand [g] |
|---|---|---|
| Mahlhilfsmittel | 0,5 | < 0,5 |
| Herkömmliches Mittel | 3-4 | 4-5 |

### Festigkeit:

| | Sinter Festigkeit [N/mm²] | Hochofenschlacke Festigkeit [N/mm²] |
|---|---|---|
| Mahlhilfsmittel | 180 | 170 |
| Herkömmliches Mittel | 180 | 150 |

### Mahlfeinheit:

Als Kenngröße wurde D(v, 0,9) verwendet, d.h. der Durchmesser in µm unterhalb dem 90% der Durchmesser der vermessenen Partikel liegen.

| | Sinter D(v, 0,9) | Hochofenschlacke D(v, 0,9) |
|---|---|---|
| Mahlhilfsmittel | 19 | 24 |
| Herkömmliches Mittel | 19 | 23 |

Diese Ergebnisse zeigen, daß die Temperatur bei der Mahlung signifikant niedriger als bei Verwendung herkömmlicher Mahlhilfsmittel bleibt. Dadurch kann der Taktzyklus der Analysen verkürzt werden. Aufgrund der geringen Rückstände im Mahlgefäß ist der Reinigungsaufwand nach der Vermahlung geringer und die Gefahr von Verschleppungen sinkt.

## Patentansprüche

1. Verwendung eines Mahlhilfmittels bestehend aus 5 bis 20 Gew.% Lactose- Monohydrat, 77,5 bis 95 Gew.% mikrokristalliner Cellulose und 0 bis 2,5 Gew.% Stearinsäure zur Probenvorbereitung für die Röntgenfluoreszenz-Analyse.

2. Verwendung entsprechend Anspruch 1, **dadurch gekennzeichnet, dass** das Mahlhilfsmittel als Pulver vorliegt.

3. Verwendung entsprechend Anspruch 1, **dadurch gekennzeichnet, dass** das Mahthilfsmittel tablettiert vorliegt.

## Claims

1. Use of a grinding aid consisting of 5 to 20% by weight of lactose monohydrate, 77.5 to 95% by weight of microcrystalline cellulose and 0 to 2.5% by weight of stearic acid for sample preparation for X-ray fluorescence analysis.

2. Use corresponding to Claim 1, **characterised in that** the grinding aid is in the form of a powder.

3. Use corresponding to Claim 1, **characterised in that** the grinding aid is in tabletted form.

## Revendications

1. Utilisation d'une assistance au meulage constituée par 5 à 20% en poids de monohydrate de lactose, 77,5 à 95% en poids de cellulose microcristalline et 0 à 2,5% en poids d'acide stéarique pour une préparation d'échantillon pour une analyse par fluorescence rayons X.

2. Utilisation correspondant à la revendication 1, **caractérisée en ce que** l'assistance au meulage est sous la forme d'une poudre.

3. Utilisation correspondant à la revendication 1, **caractérisée en ce que** l'assistance au meulage est sous forme de tablettes.
